# EUROPÄISCHE PATENTANMELDUNG

(11) **EP 0 648 903 A1**
(43) Veröffentlichungstag der Anmeldung: **19.04.1995**
(21) Anmeldenummer: 94116046.7
(22) Anmeldetag: 12.10.1994
(51) Int. Cl.: E04D 13/14, F16L 5/02

(54) **Dacheindeckungsplatte**

(30) Priorität: 13.10.1993 DE 9315451 U
(71) Anmelder: EWALD DÖRKEN AG, D-58313 Herdecke (DE)
(72) Erfinder: Jablonka, Dieter, Dipl.-Ing., D-58313 Herdecke (DE)
(74) Vertreter: Patentanwälte Wenzel & Kalkoff

(57) **Zusammenfassung**

Eine Dacheindeckungsplatte (2), die aus einer Grundplatte (3) mit einer Öffnung und aus einem in die Öffnung einsetzbaren und verschwenkbaren Lüftungskanal (4) besteht, erhält einen konstruktiv einfachen Aufbau und läßt eine einheitliche Konstruktion für den verschwenkbaren Teil des Lüftungskanals (4) dadurch zu, daß der Lüftungskanal (4) um eine an der Dacheindeckungsplatte (2) angeordnete Drehachse (6) schwenkbar ist und die vom Lüftungskanal (4) in der Ebene der Grundplatte (3) durchstoßene Fläche beim Verschwenken hinsichtlich Lage und Größe konstant ist.

## Beschreibung

Die Erfindung betrifft eine Dacheindeckungsplatte, bestehend aus einer Grundplatte mit einer Öffnung und aus einem in die Öffnung einsetzbaren und verschwenkbaren Lüftungskanal.

Dacheindeckungsplatten der vorstehenden Art dienen dazu, eine Be- oder Entlüftungsleitung oder dergleichen durch die Dacheindeckung hindurch nach außen oberhalb des Daches zu führen. Hierfür weist die Grundplatte der Dacheindeckungsplatte eine Öffnung und einen in die Öffnung einsetzbaren Lüftungskanal auf, der an seinem unteren Ende mit einem Fallrohr oder dergleichen verbunden ist und gegenüber der Ebene der Grundplatte verschwenkbar ist, um eine Anpassung an Dächer mit verschiedener Neigung zu erreichen.

Eine bekannte Dacheindeckungsplatte dieser Art geht aus der EP-B-0 276 389 hervor. Die Dacheindeckungsplatte weist hier auf ihrer Außenseite einen Dom mit kuppelförmiger Oberseite auf, auf dem ein der Form des Doms angepaßtes Haubenteil verschiebbar gelagert ist. Durch das Haubenteil ist ein mit diesem fest verbundenes Rohr geführt, und durch Verschieben des Haubenteils ist der Neigungswinkel des Lüftungskanals gegenüber der Grundplatte stets so einstellbar, daß der Lüftungskanal lotrecht steht.

Zur Herstellung dieser bekannten Dacheindeckungsplatte muß allerdings eine längliche Aussparung vorgesehen werden, um eine Verschwenkung des Lüftungskanals über den gesamten vorgesehenen Schwenkbereich desselben zu ermöglichen. Die Aussparung ist als Langloch ausgeführt, wenn die Verschwenkung des Lüftungskanals um eine Drehachse innerhalb einer vertikalen Ebene erfolgt. Eine Abdichtungdes Langlochs z. B. gegen das Eindringen von Regenwasser setzt einen entsprechend groß dimensionierten Dom an der Dacheindeckungsplatte und ein dem Dom zugeordnetes Haubenteil in entsprechender Größenordnung voraus, so daß der Herstellungsaufwand hoch ist. Die Abdichtung des Langlochs bleibt dennoch schwierig. Weiterhin wird der effektive Schwenkbereich des Lüftungskanals auf einen relativ kleinen Winkelbereich beschränkt. Schließlich ist der Fertigungsaufwand ohnehin bereits beträchtlich, weil es eine Vielzahl verschieden geformter Dacheindeckungsplatten gibt, so daß eine entsprechend hohe Anzahl von Formen angefertigt und bereitgehalten werden muß.

Der Erfindung liegt deshalb die Aufgabe zugrunde, eine Dacheindeckungsplatte der angegebenen Gattung zu schaffen, die einen konstruktiv einfachen Aufbau besitzt, eine Fertigung mit vergleichsweise geringem Aufwand zuläßt und die obengenannten Nachteile vermeidet oder mindestens verringert.

Erfindungsgemäß wird diese Aufgabe dadurch gelöst, daß
- der Lüftungskanal um eine an der Dacheindeckungsplatte angeordnete Drehachse schwenkbar ist und
- die vom Lüftungskanal in der Ebene der Grundplatte durchstoßene Fläche beim Verschwenken hinsichtlich Lage und Größe konstant ist.

Eine erfindungsgemäße Dacheindeckungsplatte besteht demnach im wesentlichen aus einer mit einer Öffnung versehenen Grundplatte, an der der Lüftungskanal um eine vorzugsweise fest angeordnete Drehachse je nach gewünschter Neigung des Lüftungskanals gegenüber der Grundplatte schwenkbar ist, wobei - unabhängig von der jeweiligen Schwenkposition - die Öffnungsfläche in der Grundplatte hinsichtlich Lage und Größe gleich bleibt. Vorzugsweise wird hierbei ein Lüftungskanal gewählt, der aus einem Rohrbogen mit einer außerhalb des Rohrbogens liegenden Drehachse besteht. Diese Lösung vermeidet folglich alle Nachteile, die dadurch entstehen, daß die in der Grundplatte für die Hindurchführung des Lüftungskanals vorgesehene Öffnung einen sehr viel größeren Querschnitt als der Lüftungskanal aufweist, wenn nämlich die beim Verschwenken des Lüftungskanals gegenüber der Grundplatte durchstoßene Fläche wandert.

Erfindungsgemäß ist jedoch nicht nur die Lage, sondern auch die Größe der durchstoßenen Fläche in allen Schwenkpositionen des Lüftungskanals bzw. des Rohrbogens konstant.

Diese Ausbildung und Anordnung ermöglicht nicht nur eine erhebliche Vereinfachung der Konstruktion und des Aufbaus der Verbindung zwischen Grundplatte und Lüftungskanal mit der Folge einer beträchtlichen Materialersparnis, sondern die zwischen Grundplatte und Lüftungskanal erforderliche Abdichtung läßt sich wesentlich einfacher herstellen und anbringen, und sie weist auch eine höhere Zuverlässigkeit und Lebensdauer auf. Denn die sich beim Verschwenken des Rohrbogens gegenüber der Grundplatte ergebenden geometrischen Verhältnisse sind denen einer geradlinigen Durchführung an der Stelle der Abdichtung und Hindurchführung bei ausreichend bemessenem Rohrbogenradius annähernd gleich.

Die Öffnung der Grundplatte, durch die der Lüftungskanal hindurchgeführt wird, ist vorzugsweise als im Querschnitt kreisringförmiger, ovaler, quadratischer, rechteckiger oder in anderer Weise polygonaler Rohrstutzen ausgebildet, damit der als Rohrbogen ausgebildete Lüftungskanal in dem Rohrstutzen für die Schwenkbewegung axial gleitverschieblich gelagert werden kann und in dem Rohrstutzen eine sichere Halterung findet, die auch eine wirksame Abdichtung des Rohrbogens gegenüber dem Rohrstutzen zuläßt.

Der Rohrbogen ist vorzugsweise mittels eines Gelenks, eines Scharniers oder dergleichen an der Dacheindeckungsplatte um die Drehachse schwenkbar gelagert. In jeder gewünschten Schwenkposition, nämlich in jeder gewünschten Neigung gegenüber der Ebene der Grundplatte, ist der Rohrbogen vorzugsweise mittels einer Feststellvorrichtung an der Dacheindeckungsplatte arretierbar. Hierfür kommen beispielsweise in der nachfolgenden Beschreibung eines Ausführungsbeispiels dargestellte Mittel in Betracht.

Zur Abdichtung des Rohrbogens gegenüber dem Rohrstutzen dient zweckmäßig ein elastisch verformbarer Dichtring, der beispielsweise mittels eines auf den Rohrstutzen aufschraubbaren Druckrings abdichtend an den Rohrbogen anpreßbar ist. Hierfür sind verschiedene konstruktive Ausgestaltungen möglich.

Bei der Montage der erfindungsgemäßen Dacheindeckungsplatte wird zunächst die Grundplatte wie die angrenzenden Dacheindeckungsplatten auf die zugeordneten Dachlatten aufgelegt, und zwar zweckmäßig mit dem bereits durch den Rohrstutzen hindurchgeführten und an der Grundplatte gelenkig befestigten Rohrbogen. Zur Einstellung des erforderlichen Neigungswinkels des Endstücks des Rohrbogens zur Dacheindeckungsplattenebene durch Verschwenken des Rohrbogens gegenüber der Grundplatte und dem Rohrstutzen wird der Rohrbogen in dieser Lage mit einer Feststellvorrichtung arretiert.

Gleichzeitig wird eine Abdichtung der vorerwähnten Art zwischen dem Rohrbogen und dem Rohrstutzen hergestellt.

Die Grundplatte kann in üblicher Weise als Spritzgußteil aus Kunststoff hergestellt werden. Wenn der Hersteller eine Vielzahl der heute verwendeten Dacheindeckungsplattenformen berücksichtigen will, ergibt sich eine sehr hohe Anzahl von Formen, nämlich Spritzgußformen, die mit einem entsprechend hohen Kostenaufwand verbunden ist.

Nach einer vorteilhaften Ausführungsform der Erfindung ist deshalb eine zweiteilige Dacheindeckungsplatte vorgesehen, die einerseits aus der Grundplatte mit dem Rohrstutzen und andererseits aus einem vorzugsweise ringförmigen Aufsatz mit einer Durchtrittsöffnung für den Rohrbogen besteht. Der Aufsatz ist entweder dauerhaft durch Kleben, Verschweißen etc. oder aber mit mechanischen Mitteln lösbar auf dem Rohrstutzen befestigt. Die Grundplatte mit dem Rohrstutzen wird in einer Vielzahl von Dacheindeckungsplattenformen hergestellt. Dafür gibt es eine Reihe von Möglichkeiten, nämlich die Grundplatte entweder aus Kunststoff tiefgezogen oder spritzgegossen oder aber aus tonhaltigem Material oder Beton herzustellen. An dem ringförmigen Aufsatz, der mit jeder Dacheindeckungsplatte gleich welcher Form zu verbinden ist, werden die Funktionselemente wie Lagerung, Gelenkverbindung, Abdichtung und Feststellvorrichtung für den Rohrbogen ausgebildet. Auf diese Weise braucht nur ein einziger Aufsatztyp hergestellt zu werden, der auf eine Vielzahl verschieden geformter Grundplatten aufsetzbar ist, weil der Rohrstutzen als gleichbleibendes Verbindungselement für die Befestigung des Aufsatzes zur Verfügung steht.

Der ringförmige Aufsatz kann im übrigen auch als Antennendurchführung oder Steigtritt oder auch als Solarelementbefestiger ausgebildet und an dem Rohrstutzen jeder Grundplatte befestigt werden. Damit ergibt sich für eine erfindungsgemäß ausgestaltete Dacheindeckungsplatte ein vielfältiger Anwendungsbereich bei vergleichsweise geringen Herstellungskosten, jedoch mit einer bisher nicht erreichbaren hohen Anpassungsflexibilität.

Alternativ zu der oben angegebenen Abdichtung des Rohrbogens in der Öffnung des an der Grundplatte oder an dem Aufsatz der Dacheindeckungsplatte vorgesehenen Rohrstutzens kann erfindungsgemäß eine Abdichtung vorgesehen sein, die aus einer im Bereich des Rohrstutzens an die Grundplatte oder an den Aufsatz angeformten Dichtungsmanschette besteht, die an der Außenfläches des Rohrbogens ringsum abdichtend anliegt. Vorzugsweise umfaßt die Dichtungsmanschette ein in dem an den Rohrstutzen angrenzenden Bereich des Aufsatzes oder der Grundplatte angeformtes Ringteil, von dem die Dichtungsmanschette ausgeht. Die Dichtungsmanschette weist in dem Bereich, in dem sie über den Rohrstutzen hinaus vorsteht, eine Dichtungslippe auf, die vorzugsweise elastisch federnd an dem Rohrbogen anliegt, so daß die Abdichtung der Schwenkbewegung des Rohrstutzens beim Einstellen in dessen endgültige Position folgen und die Außenfläche des Rohrbogens im Anlagebereich ringsum sicher abdichten kann. Das Anformen der Dichtungsmaschette und des Ringteils derselben an dem Rohrstutzen kann bereits während der Herstellung des Aufsatzes bzw. der Grundplatte beim Extrudieren oder auch anschließend durch Ankleben und dergleichen erfolgen. Die Dichtungsmanschette besteht einschließlich des Ringteils aus einem für die Abdichtung geeigneten elastischen Kunststoff, der zusammen mit der Dimensionierung und Anbringung der Dichtungsmanschette eine dauerhafte Abdichtung gewährleistet.

Im folgenden werden Ausführungsbeispiele der Erfindung anhand der Zeichnungen näher erläutert. In den Zeichnungen zeigen:
- Fig. 1: eine Schnittansicht eines ersten Ausführungsbeispiels einer Dacheindeckungsplatte;
- Fig. 2: eine Schnittdarstellung eines zweiten Ausführungsbeispiels einer Dacheindeckungsplatte;
- Fig. 3: eine Schnittdarstellung eines dritten Ausführungsbeispiels einer Dacheindeckungsplatte mit einer von den vorhergehenden Ausführungsbeispielen abweichenden Lösung für eine Abdichtung des verwendeten Rohrbogens.

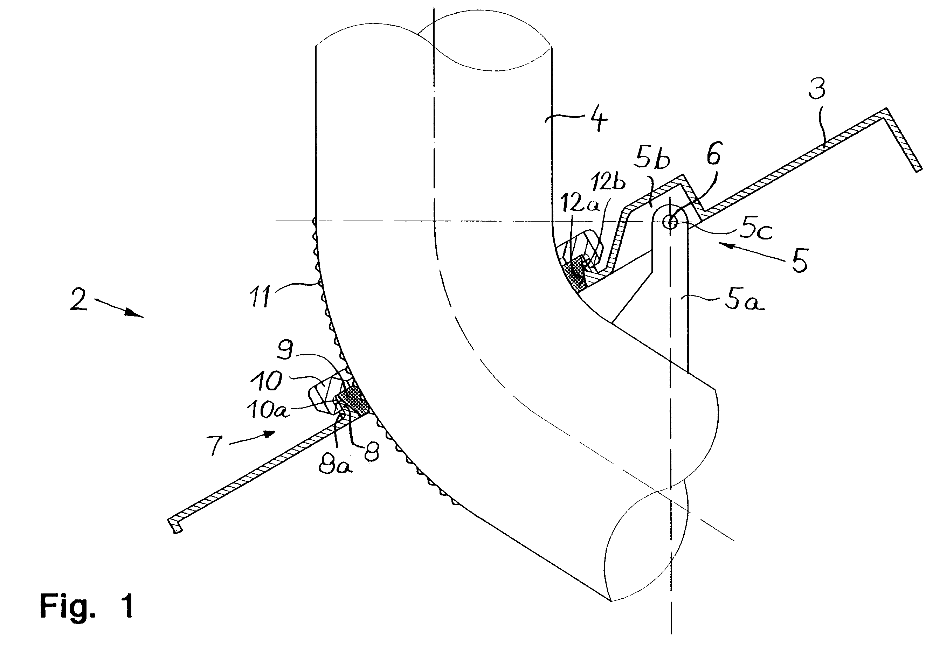

Die in Fig. 1 dargestellte und allgemein mit 2 bezeichnete Dacheindeckungsplatte umfaßt eine aus Kunststoff als Spritzgußteil hergestellte Grundplatte 3 mit einem im mittleren Bereich derselben an ihrer in der Gebrauchslage oberen Seite vorspringenden Rohrstutzen 8, der an seiner Außenseite ein Außengewinde 8a und an seiner Innenseite eine Schrägfläche 12a aufweist. Diese bildet den Sitz für einen Dichtring 9, der außen eine entsprechende Schrägfläche 12b aufweist.

In die Öffnung des Rohrstutzens 8 ist in der in der Zeichnung dargestellten Weise ein vorzugsweise aus Kunststoff bestehender Rohrbogen 4 eingesetzt, der an seinem oberen Ende für eine Be- oder Entlüftung ausgebildet (nicht dargestellt) und an seinem unteren ebenfalls nicht dargestellten Ende an eine Lüftungsleitung angeschlossen ist.

Auf der Seite des Innenradius des Rohrbogens 4 ist eine Gelenköse 5a befestigt, die mit einem in einem an der Oberseite der Grundplatte 3 ausgeformten Gehäuse 5b angebrachten Gelenkzapfen 5c ein allgemein mit 5 bezeichnetes Gelenk bildet, das ein Verschwenken des Rohrbogens 4 gegenüber der Grundplatte 3 um eine fest angeordnete Drehachse 6 zuläßt.

Damit der Rohrbogen 4 gegenüber der Öffnung des Rohrstutzens 8 eine allgemein mit 7 bezeichnete Abdichtung erhält, wird der vorgenannte aus elastischem Material bestehende Dichtring 9 durch Aufschrauben eines Gewinderings 10 mit einem Innengewinde 10a auf den Rohrstutzen 8 ringsum abdichtend an den Rohrbogen 4 angedrückt, wie sich aus der Zeichnung ergibt.

Durch eine an der im Bereich des Außenradius des Rohrbogens 4 ausgebildete Verzahnung 11 wird eine Feststellvorrichtung zum Arretieren des Rohrbogens 4 in der jeweils gewählten Schwenklage gegenüber der Grundplatte 3 gebildet, indem nämlich der Dichtring 9 mit seiner Innenseite in den benachbarten Abschnitt der Verzahnung 11 eingreift, wenn er aufgrund der Schrägflächenpaarung 12a, 12b auch unter radialem Druck durch den aufgeschraubten Gewindering 10 steht.

Auf diese Weise läßt sich der aus der Dacheindeckungsfläche herausragende Teil des als Lüftungskanal wirkenden Rohrbogens 4 jeder gewünschten Dachneigung leichtund sicher anpassen.

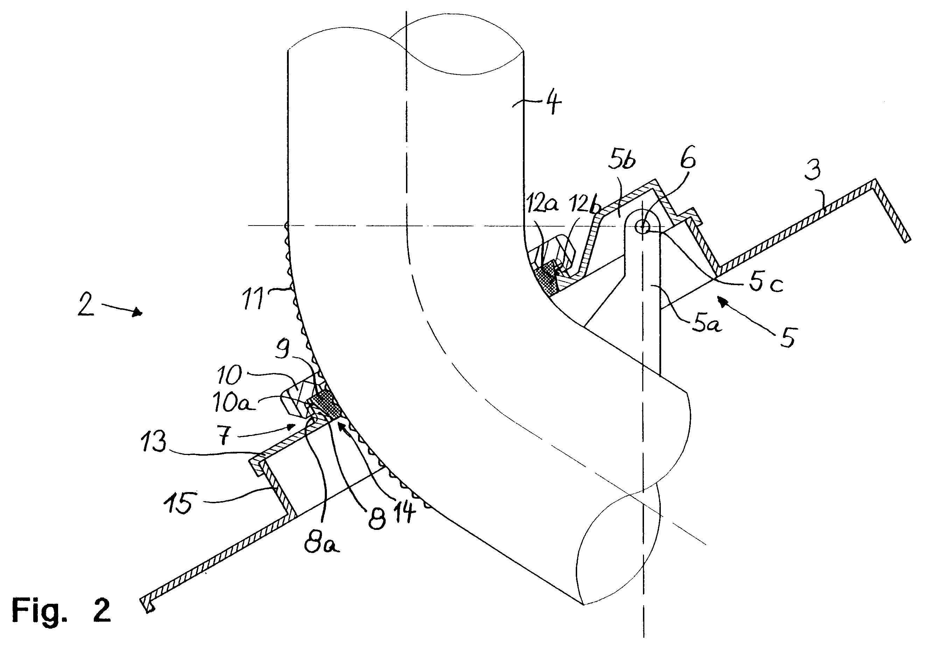

Das in Fig. 2 dargestellte zweite Ausführungsbeispiel unterscheidet sich von dem ersten Ausführungsbeispiel dadurch, daß anstelle des Rohrstutzens 8 eine ringförmige Stützwand 15 von der Oberseite der Grundplatte 3 der ebenfalls allgemein mit 2 bezeichneten Dacheindeckungsplatte vorsteht und einen Aufsatz 13 trägt, der in der dargestellten Anordnung mit der ringförmigen Stützwand 15 durch Verkleben, Verschweißen oder dergleichen fest oder mit mechanischen Mitteln lösbar verbunden ist. Der Aufsatz 13 entspricht in seiner Ausbildung und Funktion im wesentlichen dem mittleren Abschnitt der in Fig. 1 dargestellten Grundplatte 3 mit dem Rohrstutzen 8, wie sich leicht aus einem Vergleich von Fig. 1 und 2 ergibt. Denn der Aufsatz 13 weist wiederum den Rohrstutzen 8, den Dichtring 9 in der Öffnung 14 und den zur Herstellung der Abdichtung 7 auf den Rohrstutzen 8 aufschraubbaren Gewindering 10 ebenso wie das allgemein mit 5 bezeichnete Gelenk zum Verschwenken des Rohrbogens 4 um die Drehachse 6 auf.

Der Aufbau des zweiten Ausführungsbeispiels gestattet die Herstellung der Grundplatte 3 als Tiefziehteil aus Kunststoff. Auch eine Herstellung aus tonhaltigem Material oder Beton kommt in Betracht, so daß in jedem Falle eine kostengünstige Herstellung möglich ist, um eine Vielzahl verschieden geformter Grundplatten 3 zur Anpassung an eine Vielzahl üblicher Dacheindeckungsplattentypen zu erreichen. Demgegenüber wird der Aufsatz 13 nur in einem einzigen Typ hergestellt, der auf eine Vielzahl verschieden geformter Grundplatten 3 aufsetzbar ist, weil die Stützwand 15 als gleichbleibendes Verbindungselement für die Befestigung des Aufsatzes 13 zur Verfügung steht.

Wenn man auf eine fest an der Grundplatte 3 angeordnete Drehachse 6 des Rohrbogens 4 verzichten kann, kann das Gelenk 5 entfallen, und es genügt bereits ein im Krümmungsbereich mit ringsum laufenden Rippen anstelle der Verzahnung 11 versehener Rohrbogen 4. In diesem Fall bildet der Dichtring 9 eine den Rohrbogen 4 im Bereich der Rippen ringsum umfassende Halterung, die sich noch durch Einlegen eines offenen und dadurch radial zusammendrückbaren Druckrings zwischen dem Gewindering 10 und dem Dichtring 9 verstärken läßt. Diese Ausführung ist nicht dargestellt.

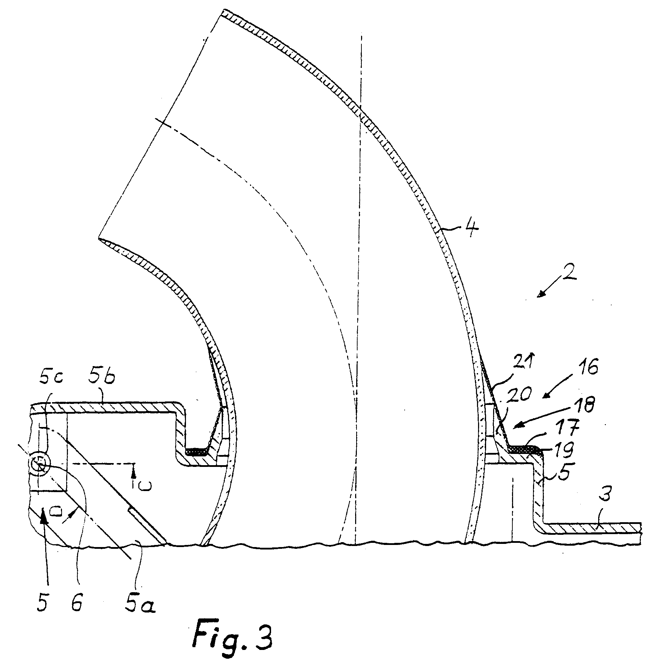

In Fig.3 ist eine alternative Form der Abdichtung 16 des Rohrbogens 4 in der Öffnung des Rohrstutzens 20 dargestellt, während der Aufbau im übrigen im wesentlichen den Ausführungsbeispielen von Fig. 1 und/oder 2 entspricht.

Die Abdichtung 16 umfaßt eine aus einem dichtungselastischen Kunststoff bestehende Dichtungsmanschette 18 mit einem zur Befestigung der Dichtungsmanschette 18 etwas stärker dimensionierten Ringteil 17. Gemeinsam mit diesem ist die Dichtungsmanschette 18 an den Rohrstutzen 20 und an den den Rohrstutzen 20 umgebenden Sitz 19 an der Grundplatte 3 angeformt, angeklebt oder in anderer geeigneter Weise befestigt. Von der Dichtungsmanschette 18 steht über den Verbindungsbereich an dem Rohrstutzen 20 eine ringförmige Dichtungslippe 21 vor, die sich, wie die Zeichnung veranschaulicht, ringsum abdichtend an die Außenfläche des Rohrbogens 4 anlegt.

### Bezugszeichenliste

- 1: -
- 2: Dacheindeckungsplatte
- 3: Grundplatte
- 4: Rohrbogen
- 5: Gelenk, allgemein
- 5a: Gelenköse
- 5b: Gehäuse
- 5c: Gelenkzapfen
- 6: Drehachse
- 7: Abdichtung, allgemein
- 8: Rohrstutzen
- 8a: Außengewinde
- 9: Dichtring
- 10: Gewindering
- 10a: Innengewinde
- 11: Verzahnung (am Rohrbogen 4)
- 12a: Schrägfläche an der Innenseite des Rohrbogens 8
- 12b: Schrägfläche an dem Dichtring 9
- 13: Aufsatz
- 14: Öffnung
- 15: Ringförmige Stützwand
- 16: Abdichtung, allgemein
- 17: Ringteil
- 18: Dichtungsmanschette
- 19: Sitz
- 20: Rohrstutzen
- 21: Dichtungslippe

## Patentansprüche

1. Dacheindeckungsplatte, bestehend aus einer Grundplatte mit einer Öffnung und aus einem in die Öffnung einsetzbaren und verschwenkbaren Lüftungskanal, dadurch **gekennzeichnet**, daß
- der Lüftungskanal um eine an der Dacheindeckungsplatte (2) angeordnete Drehachse (6) schwenkbar ist und
- die vom Lüftungskanal in der Ebene der Grundplatte (3) durchstoßene Fläche beim Verschwenken hinsichtlich Lage und Größe konstant ist.

2. Dacheindeckungsplatte nach Anspruch 1, dadurch **gekennzeichnet**, daß der Lüftungskanal aus einem Rohrbogen (4) besteht und die Drehachse (6) außerhalb des Rohrbogens (4) liegt.

3. Dacheindeckungsplatte nach Anspruch 1 oder 2, dadurch **gekennzeichnet**, daß die Grundplatte (3) eine als Rohrstutzen (8, 20) ausgebildete Öffnung aufweist.

4. Dacheindeckungsplatte nach einem der vorhergehenden Ansprüche, dadurch **gekennzeichnet**, daß auf einer von der Grundplatte vorstehenden ringförmigen Stützwand (15) ein ringförmiger Aufsatz (13) mit einer Durchtrittsöffnung (14) durch Kleben, Verschweißen etc. dauerhaft oder mit mechanischen Mitteln lösbar befestigt ist.

5. Dacheindeckungsplatte nach einem der vorhergehenden Ansprüche, dadurch **gekennzeichnet**, daß die Grundplatte (3) aus Kunststoff besteht und mit dem Rohrstutzen (8) oder der Stützwand (15) als ein Teil tiefgezogen oder spritzgegossen ist.

6. Dacheindeckungsplatte nach einem der vorhergehenden Ansprüche, dadurch **gekennzeichnet**, daß der Aufsatz (13) ein Spritzgußteil aus Kunststoff ist.

7. Dacheindeckungsplatte nach einem der Ansprüche 1 bis 4 und 6, dadurch **gekennzeichnet**, daß die Grundplatte (3) aus tonhaltigem Material oder Beton hergestellt ist.

8. Dacheindeckungsplatte nach einem der vorhergehenden Ansprüche, dadurch **gekennzeichnet**, daß der Rohrbogen (4) mittels eines Gelenks (5), eines Scharniers oder dergleichen an der Dacheindeckungsplatte (2) um die Drehachse (6) schwenkbar gelagert ist.

9. Dacheindeckungsplatte nach einem der vorhergehenden Ansprüche, dadurch **gekennzeichnet**, daß zwischen dem Rohrstutzen (8, 20) und dem Rohrbogen (4) eine Abdichtung (7, 16) vorgesehen ist.

10. Dacheindeckungsplatte nach Anspruch 9, dadurch **gekennzeichnet**, daß zur Herstellung der Abdichtung (7) ein elastisch verformbarer Dichtring (9) mittels eines auf den Rohrstutzen (8) aufschraubbaren Gewinderings (10) abdichtend an den Rohrbogen (4) anpreßbar ist.

11. Dacheindeckungsplatte nach einem der vorhergehenden Ansprüche, dadurch **gekennzeichnet**, daß der Rohrbogen (4) in jeder Schwenkposition mittels einer Feststellvorrichtung an der Dacheindeckungsplatte (2) arretierbar ist.

12. Dacheindeckungsplatte nach Anspruch 11 , dadurch **gekennzeichnet**, daß die Feststellvorrichtung aus lösbar miteinander in Eingriff stehenden Rastelementen z. B. einer Verzahnung (11) und entsprechenden Halteelementen besteht, die in einer - mit Bezug auf den Rohrbogen (4) - der Drehachse (6) vorzugsweise diametral gegenüberliegenden Position einerseits an dem Rohrbogen (4) und andererseits an der Grundplatte (3) oder an dem Rohrstutzen (8) direkt oder indirekt befestigt sind.

13. Dacheindeckungsplatte nach Anspruch 12, dadurch **gekennzeichnet**, daß die Verzahnung (11) mit dem Dichtring (9) als Halteelement in Eingriff steht.

14. Dacheindeckungsplatte nach Anspruch 4 in Verbindung mit einem oder mehreren der Anspruch 4 folgenden Ansprüche, dadurch **gekennzeichnet**, daß der Rohrbogen (4) nicht an der Grundplatte (3) oder deren Rohrstutzen (8), sondern an dem ringförmigen Aufsatz (13) schwenkbar gelagert und/oder an diesem in jeder Schwenkposition arretierbar und/oder diesem gegenüber abgedichtet ist.

15. Dacheindeckungsplatte nach Anspruch 9 und einem oder mehreren der Ansprüche 11 - 14, dadurch **gekennzeichnet**, daß die Abdichtung (16) aus einer im Bereich des Rohrstutzens (20) an die Grundplatte (3) oder an den Aufsatz (13) angeformten Dichtungsmanschette (18) besteht, die an der Außenfläche des Rohrbogens (4) ringsum abdichtend anliegt.
